# EUROPEAN PATENT APPLICATION

(11) **EP 4 186 698 A1**
(43) Date of publication of application: **31.05.2023**
(21) Application number: 21846787.6
(22) Date of filing: 20.07.2021
(51) Int. Cl.: B32B 27/18, B32B 27/30, C08L 53/02, C09J 123/14, C09J 129/14, C09J 153/02, B32B 7/12

(54) **LAMINATE HAVING FUNCTIONS THAT VARY BETWEEN TWO SURFACES**

(30) Priority: 22.07.2020 JP 2020125189
(71) Applicant: Kuraray Co., Ltd., Kurashiki-shi, Okayama 710-0801 (JP)
(72) Inventor: KODERA, Jumpei, Tainai-shi, Niigata 959-2691 (JP); MUKOO, Yoshiki, Tsukuba-shi, Ibaraki 305-0841 (JP); FUKUHARA, Naoto, Tsukuba-shi, Ibaraki 305-0841 (JP)
(74) Representative: Müller-Boré & Partner Patentanwälte PartG mbB
(86) International application number: PCT/JP2021/027213
(87) International publication number: WO 2022/019310

(57) **Abstract**

A laminate excellent in transparency, weather resistance, antifouling property, chemical resistance, antifogging property, and handling property is provided. A laminate (1) includes a front layer (1A), the front layer (1A) being a weather-resistant resin layer composed of an acrylic resin composition (A) containing an elastic material (R) and an ultraviolet absorber; a rear layer (1B), the rear layer (1B) being an antifouling resin layer containing a vinyl alcohol resin (B); and an adhesive layer (1C) disposed between the front layer (1A) and the rear layer (1B), the adhesive layer (1C) containing a thermoplastic elastomer (C), the thermoplastic elastomer (C) being a block copolymer containing a polymer block (c1) containing an aromatic vinyl compound unit and a polymer block (c2) containing a conjugated diene compound unit, or being a compound obtained by hydrogenating the aforementioned block copolymer.

## Description

### Technical Field

The present invention relates to a laminate of which both surfaces have different functions. More specifically, the present invention relates to a laminate which is excellent in transparency, weather resistance, antifouling property, chemical resistance, antifogging property, and handling property, and is suitable for uses in automobile exteriors, building materials, agriculture, and the like.

### Background Art

Methacrylic resins are excellent in transparency, weather resistance, appearance, and the like, and are used for uses in automobile interiors and exteriors, building materials, and the like. Although it is expected that methacrylic resins can be used in agricultural uses because of their weather resistance, there is a problem in regard to their antifouling property and handling property when they are used as they are.

Patent Literature 1 discloses, as a film having an antifouling property, a hard coating film in which a hard coating layer made of a cured product of an active energy ray-curable composition having an excellent antifouling property is laminated on an acrylic resin film (Claims 1 and 8).

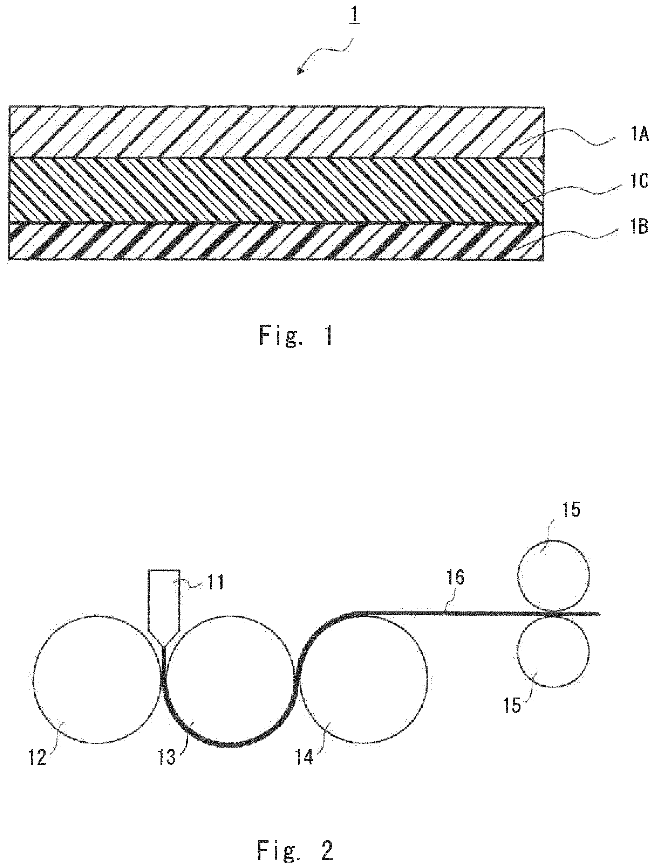

Patent Literature 2 discloses a laminated sheet of a weather-resistant resin layer containing an acrylic resin, acrylic rubber, and an ultraviolet absorber, and an antifouling resin layer containing an ethylene vinyl alcohol copolymer resin (Claim 1). In an embodiment in Patent Literature 2, a weather-resistant resin layer and an antifouling resin layer are directly laminated (Fig. 1).

Patent Literature 3 discloses a multi-layer structure in which an ethylene vinyl alcohol copolymer resin and another resin layer are laminated with an adhesive layer interposed therebetween (Claims 1 and 3).

### Citation List

### Patent Literature

Patent Literature 1: Japanese Unexamined Patent Application Publication No. 2014-106275
Patent Literature 2: Japanese Unexamined Patent Application Publication No. 2017-42975
Patent Literature 3: Japanese Patent No. 5296378

### Summary of Invention

### Technical Problem

The film disclosed in Patent Literature 1, in which a hard coating layer is laminated on an acrylic resin film, has neither a satisfactory stretching property nor a satisfactory bending resistance, and hence there is a possibility that cracking or the like may occur in the hard coating layer when the film is stretched or bent at a room temperature, so that there is a problem in regard to the handling property.

Regarding the laminated sheet disclosed in Patent Literature 2, in which a weather-resistant resin layer and a antifouling resin layer are directly laminated, the adhesion between the weather-resistant resin layer containing a methacrylic resin, which is an amorphous resin, and the antifouling resin layer containing an ethylene vinyl alcohol copolymer resin, which is a crystalline resin, is unsatisfactory, and hence there is a possibility that delamination may occur during the handling of the film.

In Patent Literature 3, there is no description of the lamination of the acrylic resin and the ethylene vinyl alcohol copolymer resin through the adhesive layer, and Patent Literature 3 does not disclose any technique for satisfactorily bonding the acrylic resin, which an amorphous resin, with the ethylene vinyl alcohol copolymer resin, which is a crystalline resin.

The present invention has been made in view of the above-described circumstances, and an object thereof is to provide a laminate which is excellent in transparency, weather resistance, antifouling property, chemical resistance, antifogging property, and handling property.

### Solution to Problem

The present invention provides laminates described in the below-shown Items [1] to [6].
[1] A laminate of which both surfaces have different functions, including:
   a front layer, the front layer being a weather-resistant resin layer composed of an acrylic resin composition (A) containing an elastic material (R) and an ultraviolet absorber;
   a rear layer, the rear layer being an antifouling resin layer containing a vinyl alcohol resin (B); and
   an adhesive layer disposed between the front layer and the rear layer, the adhesive layer containing a thermoplastic elastomer (C), the thermoplastic elastomer (C) being a block copolymer containing a polymer block (c1) containing an aromatic vinyl compound unit and a polymer block (c2) containing a conjugated diene compound unit, or being a compound obtained by hydrogenating the aforementioned block copolymer, in which
   the vinyl alcohol resin (B) is an ethylene vinyl alcohol copolymer in which a content of an ethylene unit is 20 to 50 mol%,
   the adhesive layer is composed of a thermoplastic polymer composition (X) containing 100 pts.mass of the thermoplastic elastomer (C), and 10 to 100 pts.mass of at least one adhesion-imparting component (D) selected from the group consisting of a polyvinyl acetal resin (DV) and a polar group-containing polypropylene-based resin (DP), and
   the polymer block (c2) is a copolymer block containing a butadiene unit and/or an isoprene unit, in which a ratio of a sum of amounts of 1,2-bonding and 3,4-bonding to a sum of amounts of the 1,2-bonding, the 3,4-bonding, and 1,4-bonding is 40 mol% or higher.
[2] The laminate described in Item [1], in which
   the acrylic resin composition (A) contains a methacrylic resin (M) containing 80 mass% or more of a methyl methacrylate unit, an elastic material (R), and the ultraviolet absorber,
   the ultraviolet absorber is a benzotriazole-based ultraviolet absorber and/or a triazine-based ultraviolet absorber,
   the acrylic resin composition (A) is an acrylic resin composition in which, based on a total of 100 pts.mass of the methacrylic resin (M) and the elastic material (R), a content of the methacrylic resin (M) is 10 to 99 pts.mass and a content of the elastic material (R) is 90 to 1 pts.mas, and
   a transmittance of the laminate at a wavelength of 300 nm is 5% or lower.
[3] The laminate described in Item [1] or [2], in which the elastic material (R) is crosslinked rubber particles, and/or a block copolymer containing a methacrylic ester polymer block (g1) containing a methacrylic ester unit and an acrylic ester polymer block (g2) containing an acrylic ester unit.
[4] The laminate described in any one of Items [1] to [3], in which a total thickness is 20 to 500 µm; a ratio of a thickness of the front layer to the total thickness is 1/20 to 2/3; and a ratio of a thickness of the rear layer to the total thickness is 1/20 to 2/3.
[5] The laminate described in any one of Items [1] to [4], in which the laminate is a stretched film.
[6] The laminate described in any one of Items [1] to [5], further including a functional layer disposed between the front layer and the rear layer, the functional layer having a function different from those of the front layer, the rear layer, and the adhesive layer.

### Advantageous Effects of Invention

According to the present invention, it is possible to provide a laminate which is excellent in transparency, weather resistance, antifouling property, chemical resistance, antifogging property, and handling property.

### Brief Description of Drawings

Fig. 1 is a schematic cross-sectional diagram of a laminate according to an embodiment of the present invention; and
Fig. 2 is a schematic diagram of an apparatus for manufacturing a laminated film according to an embodiment of the present invention.

### Description of Embodiments

### [Laminate of which both surfaces have different functions]

A laminate according to the present invention is a laminate of which both surfaces have different functions, including: a front layer which is a weather-resistant resin layer composed of an acrylic resin composition (A) containing an elastic material (R) and an ultraviolet absorber; and a rear layer which is an antifouling resin layer containing a vinyl alcohol resin (B).

The laminate according to the present invention includes an adhesive layer containing a thermoplastic elastomer (C) between the front layer and the rear layer in order to improve the adhesion between these layers.

Note that the "front" and "rear" of the laminate according to the present invention are terms that are used for the sake of convenience to distinguish both surfaces of the laminate from each other, and may not necessarily coincide with the "front" and "rear" of the laminate when it is actually used. The "front layer" may also be referred to as one of the surface layers, and the "rear layer" may also be referred to as the other surface layer. Further, in actual use, the "front layer" may be positioned on the rear side and the "rear layer" may be positioned on the front side.

Fig. 1 is a schematic cross-sectional diagram of a laminate according to an embodiment of the present invention.

In the drawing, a symbol 1 indicates a laminate; a symbol 1A indicates a front layer which is a weather-resistant resin layer; a symbol 1B indicates a rear layer which is an antifouling resin layer; and a symbol 1C indicates an adhesive layer.

If necessary, a resin layer(s) other than the adhesive layer 1C may be provided between the front layer 1A, which is a weather-resistant resin layer, and the rear layer 1B, which is an antifouling resin layer.

### (Front Layer (Weather-Resistant Resin Layer))

The front layer, which is a weather-resistant resin layer, is composed of an acrylic resin composition (A) containing an elastic material (R) and an ultraviolet absorber.

Since the front layer contains the ultraviolet absorber, its ultraviolet transmittance (UV transmittance) is low and hence it has an excellent weather resistance.

The transmittance of the front layer at a wavelength of 300 nm is preferably 5% or lower. Since the front layer contains the elastic material (R), it is excellent in stretching property and bending resistance.

Since the acrylic resin composition (A) contains the elastic material (R) which has an impact resistance, it is also referred to as an impact resistant acrylic resin.

The laminate according to the present invention, which includes the front layer composed of the acrylic resin composition (A) containing the elastic material (R) and the ultraviolet absorber, is excellent in weather resistance, and is also excellent in stretching property, bending resistance, and handling property.

In view of the surface hardness and the like of the front layer, the acrylic resin composition (A) preferably contains, as resin components, 1 to 99 pts.mass of a methacrylic resin (M) and 99 to 1 pts.mass of an elastic material (R), and more preferably contains 10 to 90 pts.mass of a methacrylic resin (M) and 90 to 10 pts.mass of an elastic material (R).

### <Methacrylic Resin (M)>

The methacrylic resin (M) is a homopolymer of methyl methacrylate (MMA) or a copolymer of MMA and at least one other monomer. In the methacrylic resin (M), the content of the MMA unit is preferably 80 mass% or higher, and more preferably 90 mass% or higher. Further, the content of the other monomer unit(s) is 20 mass% or lower, and more preferably 10 mass% or lower. One or two or more types of methacrylic resins (M) can be used.

Examples of other monomers other than MMA include acrylic esters such as methyl acrylate, ethyl acrylate, n-propyl acrylate, isopropyl acrylate, n-butyl acrylate, isobutyl acrylate, s-butyl acrylate, tert-butyl acrylate, amyl acrylate, isoamyl acrylate, n-hexyl acrylate, 2-ethylhexyl acrylate, pentadecyl acrylate, dodecyl acrylate, phenyl acrylate, benzyl acrylate, phenoxyethyl acrylate, 2-hydroxyethyl acrylate, 2-ethoxyethyl acrylate, glycidyl acrylate, allyl acrylate, cyclohexyl acrylate, norbornenyl acrylate, and isobonyl acrylate; methacrylic esters other than MMA such as ethyl methacrylate, n-propyl methacrylate, isopropyl methacrylate, n-butyl methacrylate, isobutyl methacrylate, s-butyl methacrylate, tert-butyl methacrylate, amyl methacrylate, isoamyl methacrylate, n-hexyl methacrylate, 2-ethylhexyl methacrylate, pentadecyl methacrylate, dodecyl methacrylate, phenyl methacrylate, benzyl methacrylate, phenoxyethyl methacrylate, 2-hydroxyethyl methacrylate, 2-ethoxyethyl methacrylate, glycidyl methacrylate, allyl methacrylate, cyclohexyl methacrylate, norbornenyl methacrylate, and isobonyl methacrylate; unsaturated carboxylic acids such as (meth)acrylic acid, maleic anhydride, maleic acid, and itaconic acid; olefins such as ethylene, propylene, 1-butene, isobutylene, and 1-octene; conjugated dienes such as butadiene, isoprene, and myrcene; aromatic vinyl compounds such as styrene, α-methylstyrene, p-methylstyrene, and m-methylstyrene; and (meth)acrylamide, (meth)acrylonitrile, vinyl acetate, vinyl pyridine, vinyl ketone, vinyl chloride, vinylidene chloride, and vinylidene fluoride.

In this specification, (meth)acryl is a generic term for acryl and methacryl; (meth)acrylonitrile is a generic term for acrylonitrile and methacrylonitrile; and (meth)acryloyl is a generic term for (meth)acryloyl and (meth)acryloyl.

There is no particular restriction on the stereoregularity of the methacrylic resin (M). A methacrylic resin (M) having stereoregularity such as isotactic, heterotactic, and syndiotactic may be used.

The weight-average molecular weight (Mw) of the methacrylic resin (M) is not particularly limited, and is preferably 30,000 to 180,000, more preferably 40,000 to 150,000, and particularly preferably 50,000 to 130,000. When the Mw is lower than 30,000, the impact resistance and toughness of the front layer tend to decrease, and when Mw is higher than 180,000, the flowability of the methacrylic resin (M) tends to decrease and hence the molding-processing property thereof tends to decrease.

In this specification, the weight-average molecular weight (Mw) is a weight-average molecular weight expressed in terms of polystyrene, determined by gel permeation chromatography (GPC) measurement.

The methacrylic resin (M) can be manufactured by (co)polymerizing a monomer (mixture) containing 80 mass% or more of methyl methacrylate (MMA) and, if necessary, 20 mass% or less of at least one other monomer by a known method.

A commercially-available product may be used as the methacrylic resin (M). Examples of the commercially-available product include "Parapet H1000B" (MFR: 22 g/10 min), "Parapet GF" (MFR: 15 g/10 min), "Parapet EH" (MFR: 1.3 g/10 min), "Parapet HRL" (MFR: 2.0 g/10 min), "Parapet HRS" (MFR: 2.4 g/10 min), and "Parapet G" (MFR: 8.0 g/10 min) [all of which are manufactured by Kuraray Co., Ltd.].

In this specification, the MFR of the methacrylic resin is a melt flow rate measured at 230°C under a load of 37.3 N according to JIS K 7210-1.

### <Elastic Material (R)>

In view of transparency, an impact resistance, and dispersibility, the elastic material (R) is preferably crosslinked rubber particles and/or a block copolymer.

The crosslinked rubber particles are preferably multi-layer structure particles (E).

The multi-layer structure particles (E) are particles in which at least two layers including an inner layer (e2) and an outer layer (e1) are laminated from the central side. The multi-layer structure particles (E) may further include a crosslinkable resin layer (e3) on the inner side of the inner layer (e2).

The inner layer (e2) is a layer containing a crosslinked elastic material obtained by copolymerizing at least one alkyl acrylate ester, at least one crosslinkable monomer, and, if necessary, at least one other monofunctional monomer.

The alkyl acrylate ester is preferably an alkyl acrylate ester having an alkyl group having a carbon number of 2 to 8, such as butyl acrylate and 2-ethylhexyl acrylate. In view of an impact resistance, the amount of the alkyl acrylate ester based on the total amount of the raw material monomers of the inner layer (e2) is preferably 70 to 99.8 mass%, and more preferably 80 to 90 mass%.

The crosslinkable monomer is a monomer having at least two polymerizable carbon-carbon double bonding in one molecule. Examples of the crosslinkable monomer include unsaturated carboxylic acid diesters of glycols, such as ethylene glycol dimethacrylate and butanediol dimethacrylate; alkenyl esters of unsaturated carboxylic acids such as allyl (meth)acrylate and allyl cinnamate; polyalkenyl esters of polybasic acids, such as diallyl phthalate, diallyl maleate, triallyl cyanurate, and triallyl isocyanurate; unsaturated carboxylic acid esters of polyhydric alcohols, such as trimethylol propane triacrylate; and divinylbenzene. Among them, alkenyl esters of unsaturated carboxylic acids, polyalkenyl esters of polybasic acids, and the like are preferred. In view of the impact resistance, heat resistance, and surface hardness of the front layer, the amount of the crosslinkable monomer based on the total amount of the raw material monomers of the inner layer (e2) is preferably 0.2 to 30 mass%, and more preferably 0.2 to 10 mass%.

Examples of other monofunctional monomers that may be used as required include alkyl methacrylate such as methyl methacrylate (MMA), ethyl methacrylate, n-propyl methacrylate, isopropyl methacrylate, n-butyl methacrylate, isobutyl methacrylate, pentyl methacrylate, hexyl methacrylate, octyl methacrylate, 2-ethylhexyl methacrylate, cyclohexyl methacrylate, dodecyl methacrylate, myristyl methacrylate, palmityl methacrylate, stearyl methacrylate, and behenyl methacrylate; methacrylic esters such as esters of methacrylic acid and phenols, such as phenyl methacrylate, and esters of methacrylic acid and aromatic alcohols, such as benzyl methacrylate; aromatic vinyl monomers such as styrene, α-methylstyrene, 1-vinylnaphthalene, 3-methylstyrene, 4-propylstyrene, 4-cyclohexylstyrene, 4-dodecylstyrene, 2-ethyl-4-benzylstyrene, 4-(phenylbutyl)styrene, and halogenated styrene; vinyl cyanide monomers such as (meth)acrylonitrile; and conjugated diene monomers such as butadiene and isoprene. In order to improve the impact resistance of the front layer, the amount of the other monofunctional monomers based on the total amount of the raw material monomers of the inner layer (e2) is preferably 24.5 mass% or lower, and more preferably 20 mass% or lower.

In view of the heat resistance of the front layer, the outer layer (e1) is a layer made of a hard thermoplastic resin obtained by (co)polymerizing a monomer (mixture) containing 80 mass% or more, preferably 90 mass% or more of methyl methacrylate (MMA) and, if necessary, 20 mass% or less, preferably 10 mass% or less of at least one other monofunctional monomer.

Examples of other monofunctional monomers that may be used as required include alkyl acrylate esters such as methyl acrylate, butyl acrylate, and 2-ethylhexyl acrylate; and (meth)acrylic acid.

The contents of the inner layer (e2) and the outer layer (e1) in the multi-layer structure particles (E) are not particularly limited. In view of the impact resistance, heat resistance, surface hardness, and handling property of the front layer, and to make the melt kneading with the methacrylic resin (M) easy, the content of the inner layer (e2) based on the mass of the multi-layer structure particles (E) is preferably 40 to 80 mass%, and the content of the outer layer (e1) based thereon is preferably 60 to 20 mass%.

The crosslinkable resin layer (e3), which is contained in the multi-layer structure particles (E) as required, is preferably a resin layer obtained by copolymerization of a monofunctional monomer that can be used in the outer layer (e1) and a crosslinkable monomer that can be used in the inner layer (e2).

The method for manufacturing the multi-layer structure particles (E) is not particularly limited, and in view of the control of the layer structure of the multi-layer structure particles (E), an emulsion polymerization method is preferred.

The block copolymer (G) is preferably a copolymer containing at least one methacrylic ester polymer block (g1) and at least one acrylic ester polymer block (g2).

The methacrylic ester polymer block (g1) is mainly a polymer block containing a methacrylic ester unit and, if necessary, other monomer units. In view of a stretching property, a bending resistance, and surface hardness, the content of the methacrylic ester unit in the methacrylic ester polymer block (g1) is preferably 80 mass% or more, more preferably 90 mass% or more, particularly preferably 95 mass% or more, and most preferably 98 mass% or more.

Examples of the methacrylic ester include methyl methacrylate (MMA), ethyl methacrylate, n-propyl methacrylate, isopropyl methacrylate, n-butyl methacrylate, isobutyl methacrylate, sec-butyl methacrylate, tert-butyl methacrylate, amyl methacrylate, isoamyl methacrylate, n-hexyl methacrylate, cyclohexyl methacrylate, 2-ethylhexyl methacrylate, pentadecyl methacrylate, dodecyl methacrylate, isobornyl methacrylate, phenyl methacrylate, benzyl methacrylate, phenoxyethyl methacrylate, 2-hydroxyethyl methacrylate, 2-methoxyethyl methacrylate, glycidyl methacrylate, and allyl methacrylate. One or two or more types of them can be used. Among them, in view of transparency and a heat resistance, alkyl methacrylic esters such as MMA, ethyl methacrylate, isopropyl methacrylate, n-butyl methacrylate, tert-butyl methacrylate, cyclohexyl methacrylate, and isobornyl methacrylate are preferred, and MMA is more preferred.

In view of a stretching property, a bending resistance, and surface hardness, the content of the monomer units other than the methacrylic ester unit, which is contained in the methacrylic ester polymer block (g1) as required, is preferably 20 mass% or less, more preferably 10 mass% or less, particularly preferably 5 mass% or less, and most preferably 2 mass% or less.

Examples of other monomers other than the methacrylic esters include acrylic esters, unsaturated carboxylic acids, aromatic vinyl compounds, olefins, conjugated dienes, (meth)acrylonitrile, (meth)acrylamide, vinyl acetate, vinyl pyridine, vinyl ketones, vinyl chloride, vinylidene chloride, and vinylidene fluoride. One or two or more types of them can be used.

The weight-average molecular weight (Mw) of the methacrylic ester polymer block (g1) is not particularly limited, and is preferably 5,00 to 150,000, more preferably 8,000 to 120,000, and particularly preferably 12,000 to 100,000. When the Mw is lower than 5,000, the elastic modulus decreases, so that creases may occur when stretch molding is performed at a high temperature. On the other hand, when the Mw is higher than 150,000, the laminate may rupture during the stretch molding and during the three-dimensional coating molding.

When the block copolymer (G) contains a plurality of methacrylic ester polymer blocks (g1), the monomer compositions and molecular weights of these blocks may be the same as each other or different from each other.

The acrylic ester polymer block (g2) is a polymer block containing an acrylic ester unit mainly and, if necessary, other monomer units. In view of a stretching property, a bending resistance, three-dimensional coating moldability, and the like, the ratio of the acrylic ester unit in the acrylic ester polymer block (g2) is preferably 45 mass% or more, more preferably 50 mass% or more, particularly preferably 60 mass% or more, and most preferably 90 mass% or more.

Examples of the acrylic ester include methyl acrylate, ethyl acrylate, n-propyl acrylate, isopropyl acrylate, n-butyl acrylate, isobutyl acrylate, sec-butyl acrylate, tert-butyl acrylate, amyl acrylate, isoamyl acrylate, n-hexyl acrylate, cyclohexyl acrylate, 2-ethylhexyl acrylate, pentadecyl acrylate, dodecyl acrylate, isobornyl acrylate, phenyl acrylate, benzyl acrylate, phenoxyethyl acrylate, 2-hydroxyethyl acrylate, 2-methoxyethyl acrylate, glycidyl acrylate, and allyl acrylate. One or two or more types of them can be used.

In view of a stretching property, a bending resistance, and transparency, the acrylic ester polymer block (g2) preferably contains an alkyl acrylate ester unit and a (meth)acrylic acid aromatic ester unit.

Examples of the alkyl acrylate ester include methyl acrylate, ethyl acrylate, isopropyl acrylate, n-butyl acrylate, 2-ethylhexyl acrylate, and dodecyl acrylate. Among them, n-butyl acrylate, 2-ethylhexyl acrylate, and the like are preferred.

The (meth)acrylic acid aromatic ester is an ester of an acrylic acid aromatic ester or a methacrylic acid aromatic ester, and a compound containing an aromatic ring. Examples include phenyl (meth)acrylate, benzyl (meth)acrylate, phenoxyethyl (meth)acrylate, and styryl (meth)acrylate. Among them, in view of transparency, phenyl methacrylate, benzyl methacrylate, phenoxyethyl methacrylate, benzyl acrylate, and the like are preferred.

In view of transparency, the content of the alkyl acrylate ester unit in the acrylic ester polymer block (g2) is preferably 50 to 90 mass%, and more preferably 60 to 80 mass%. Further, the content of the (meth)acrylic acid aromatic ester unit is preferably 50 to 10 mass%, and more preferably 40 to 20 mass%.

The content of other monomer units other than the acrylic ester, which is contained in the acrylic ester polymer block (g2) as required, is preferably 55 mass% or less, more preferably 50 mass% or less, particularly preferably 40 mass% or less, and most preferably 10 mass% or less.

Examples of other monomers other than the methacrylic ester include methacrylic esters, unsaturated carboxylic acids, aromatic vinyl compounds, olefins, conjugated dienes, (meth)acrylonitrile, (meth)acrylamide, vinyl acetate, vinyl pyridine, vinyl ketone, vinyl chloride, vinylidene chloride, and vinylidene fluoride. One or two or more types of them can be used.

The weight-average molecular weight (Mw) of the acrylic ester polymer block (g2) is not particularly limited. In view of a stretching property, a bending resistance, three-dimensional coating moldability, and the like, the weight-average molecular weight (Mw) of the acrylic ester polymer block (g2) is preferably 5,000 to 120,000, more preferably 15,000 to 110,000, and particularly preferably 30,000 to 100,000.

When the block copolymer (G) contains a plurality of acrylic ester polymer blocks (g2), the monomer compositions and molecular weights of these blocks may be the same as each other or different from each other.

### <Ultraviolet Absorber>

The acrylic resin composition (A) contains at least one ultraviolet absorber.

The ultraviolet absorber is a compound having an ability to absorb ultraviolet rays. Examples of the ultraviolet absorber include benzophenones, benzotriazoles, triazines, benzoates, salicylates, cyanoacrylates, oxalic anilides, malonic esters, formamidines, and the like. Among them, benzotriazoles and triazines are preferred in order to supper bleedout, and benzotriazoles are more preferred in order to suppress degradation of the resin caused by ultraviolet rays.

Examples of benzotriazoles include 2,2'-methylenebis[4-(1,1,3,3-tetramethylbutyl)-6-(2H-benzotriazole-yl)phenol] ("ADEKA STAB LA-31" manufactured by Asahi Denka Co., Ltd. or the like), 2-(2H-benzotriazole-2-yl)-4-(1,1,3,3-tetramethylbutyl)phenol ("TINUVIN 329" manufactured by Ciba Specialty Chemicals, Inc. or the like), and 2-(2H-benzotriazole-2-yl)-4,6-bis(1-methyl-1-phenylethyl)phenol ("TINUVIN 234" manufactured by Ciba Specialty Chemicals, Inc. or the like).

Examples of triazines include 2,4,6-tris(2-hydroxy-4 hexyloxy-3 methylphenyl)-1,3,5-triazine ("LA-F70" manufactured by ADEKA Corporation or the like) and a compound similar thereto such as a hydroxyphenyltriazine-based ultraviolet absorber ("TINUVIN 477-D", "TINUVIN 460", "TINUVIN 479", and "TINUVIN 1600"manufactured by BASF SE or the like).

The amount of the ultraviolet absorber added to the acrylic resin composition (A) can be designed according to its ultraviolet absorbing property, and the type and amount of the ultraviolet absorber are preferably adjusted so that the transmittance of the front layer at a wavelength of 300 nm becomes 5% or lower.

### <Other Additive>

The acrylic resin composition (A) may contain, if necessary, other additives such as an antioxidant, a heat stabilizer, a lubricant, a processing aid, an antistatic agent, an antioxidant, a colorant, and an impact resistance aid.

### (Rear Layer (Antifouling Resin Layer))

The laminate according to the present invention includes a rear layer which is an antifouling resin layer containing a vinyl alcohol resin (B). The antifouling resin layer containing the vinyl alcohol resin (B) is excellent in antifouling property, chemical resistance, and antifogging property. A known vinyl alcohol resin (B) can be used, and an ethylene-vinyl alcohol copolymer is preferred in view of antifouling property.

Since the laminate according to the present invention includes the rear layer which is the antifouling resin layer containing the vinyl alcohol resin (B), the rear-surface side of the laminate is excellent in antifouling property, chemical resistance, and antifogging property. Therefore, the laminate according to the present invention can be used in such an arrangement that the rear-surface side is positioned on the side on which the aforementioned properties are required.

### <Ethylene-Vinyl Alcohol Copolymer>

The ethylene-vinyl alcohol copolymer is one that is obtained by saponifying a copolymer of ethylene and a vinyl ester. Hereinafter, this copolymer may be expressed as "EVOH" by using its abbreviation.

The copolymerization of ethylene and a vinyl ester can be carried out by known polymerization such as solution polymerization, suspension polymerization, emulsion polymerization, and bulk polymerization. The copolymerization may be carried out either in a continuous manner or through a batch operation.

The lower limit value of the content of the ethylene unit (also referred to simply as the "ethylene content") in the EVOH is preferably 10 mol%, more preferably 20 mol%, and particularly preferably 25 mol%. The upper limit value of the ethylene content is preferably 60 mol%, more preferably 55 mol%, particularly preferably 50 mol%, and most preferably 40 mol%.

When the ethylene content is lower than the aforementioned lower limit value, the thermal stability during melt extrusion deteriorates and the copolymer is gelated, thus causing a possibility of occurrences of defects such as streaks and fish eyes. In particular, the possibility of the gelation increases when the melt extrusion is performed for a long time at a higher temperature or at a higher speed than the temperature or the speed in the ordinary melt extrusion. When the ethylene content exceeds the aforementioned upper limit value, the gas barrier property and the like may deteriorate, thus causing a possibility that the advantageous properties of the EVOH may not be sufficiently exhibited.

The content of the ethylene unit is preferably 20 to 50 mol%.

The vinyl ester is preferably vinyl acetate because it can be easily industrially obtained. The vinyl acetate usually contains a small amount of acetaldehyde as an unavoidable impurity. The acetaldehyde content in the vinyl acetate is preferably lower than 100 ppm, more preferably 60 ppm or less, particularly preferably 25 ppm or less, and most preferably 15 ppm or less.

The EVOH may contain units derived from other monomers other than the ethylene and vinyl ester. Examples of the other monomers include vinylsilane-based compounds. The content of the other monomer units in the EVOH is preferably 0.2 mol% or less.

The saponification degree of the vinyl ester unit is typically 85 mol% or higher, preferably 90 mol% or higher, more preferably 98 mol% or higher, and particularly preferably 98.9 mol% or higher. When the saponification degree is lower than the aforementioned lower limit value, the thermal stability may become unsatisfactory.

The lower limit value of the melt flow rate (MFR) of the EVOH is preferably 0.5 g/10 min, more preferably 1.0 g/10 min, and particularly preferably 1.4 g/10 min. The upper limit value of the MFR is preferably 30 g/10 min, more preferably 25 g/10 min, still more preferably 20 g/10 min, still more preferably 15 g/10 min, particularly preferably 10 g/10 min, and most preferably 1.6 g/10 min.

When the MFR of the EVOH is lower than the aforementioned lower limit value or higher than the aforementioned higher limit, the moldability and the appearance may deteriorate.

In this specification, the MFR of the EVOH is a melt flow rate measured at a temperature of 190°C under a load of 2,160 g according to JIS K 7210-1.

### <Optional Component>

The rear layer, which is an antifouling resin layer, can contain optional components such as resins other than the vinyl alcohol resin (B) and various additives and the like.

### (Adhesive Layer)

The laminate according to the present invention includes an adhesive layer containing a thermoplastic elastomer (C) between the front layer, which is a weather-resistant resin layer, and the rear layer, which is an antifouling resin layer, in order to enhance the adhesion between these layers.

Although the adhesion between the weather-resistant resin layer containing a methacrylic resin, which is an amorphous resin, and the antifouling resin layer containing an ethylene vinyl alcohol copolymer resin is not satisfactory, the interlayer adhesion can be enhanced by providing an adhesive layer containing a thermoplastic elastomer (C) between these layers. The adhesive layer containing the thermoplastic elastomer (C) is also excellent in stretching property and bending resistance.

The laminate according to the present invention including the above-described adhesive layer between the front layer and the rear layer is excellent in stretching property, bending resistance, interlayer adhesion, and handling property.

The adhesive layer is preferably composed of a thermoplastic polymer composition (X) containing a thermoplastic elastomer (C) and an adhesion imparting component (D).

### <Thermoplastic Elastomer (C)>

The thermoplastic elastomer (C) is a block copolymer containing a polymer block (c1) containing an aromatic vinyl compound unit and a polymer block (c2) containing a conjugated diene compound unit, or being a compound obtained by hydrogenating the aforementioned block copolymer.

Examples of the aromatic vinyl compound, which is the raw material for the polymer block (c1), include styrene, α-methylstyrene, 2-methylstyrene, 3-methylstyrene, 4-methylstyrene, 4-propylstyrene, 4-cyclohexylstyrene, 4-dodecylstyrene, 2-ethyl-4-benzylstyrene, 4-(phenylbutyl) styrene, 1-vinylnaphthalene, and 2-vinylnaphthalene. One or two or more types of them can be used. Among them, styrene, α-methylstyrene, 4-methylstyrene, and the like are preferred in view of flowability.

The content of the aromatic vinyl compound unit in the polymer block (c1) is preferably 80 mass% or more, more preferably 90 mass% or more, and particularly preferably 95 mass% or more.

The polymer block (c1) may contain other copolymerizable monomer units together with the aromatic vinyl compound unit. Examples of the other copolymerizable monomers include 1-butene, pentene, hexene, butadiene, isoprene, and methyl vinyl ether. The content of the other copolymerizable monomer units in the polymer block (c1) is preferably 20 mass% or less, more preferably 10 mass% or less, and particularly preferably 5 mass% or less.

Examples of the conjugated diene compound, which is the raw material for the polymer block (c2), include butadiene, isoprene, 2,3-dimethyl-1,3-butadiene, 1,3-pentadiene, and 1,3-hexadiene. One or two or more types of them can be used. Among them, butadiene and/or isoprene are preferred, and butadiene and isoprene are more preferred.

The form of the bonding of the conjugated diene compound is not particularly limited. For example, in the case of butadiene, the bonding can be 1,2-bonding and 1,4-bonding, and in the case of isoprene, the bonding can be 1,2-bonding, 3,4-bonding, and 1,4-bonding.

In the polymer block (c2), the ratio of the sum of amounts of the 1,2-bonding and the 3,4-bonding to the sum of amounts of the 1,2-bonding, the 3,4-bonding, and the 1,4-bonding is preferably 1 to 99 mol%, more preferably 35 to 98 mol%, particularly preferably 40 to 90 mol%, and most preferably 50 to 80 mol%.

In the polymer block (c2), the ratio of the sum of amounts of the 1,2-bonding and the 3,4-bonding to the sum of amounts of the 1,2-bonding, the 3,4-bonding, and the 1,4-bonding is preferably 40 mol% or higher.

Note that the ratio among the amounts of the 1,2-bonding, the 3,4 binding, and the 1,4 binding can be calculated from the ratio between the integral value of the peaks present in the range of 4.2 to 5.0 ppm derived from the 1,2-binding and the 3,4-binding, and the integral value of the peak present in the range of 5.0 to 5.45 ppm derived from the 1,4-binding in the ¹H-NMR spectrum.

The content of the conjugated diene compound unit in the polymer block (c2) is preferably 80 mass% or more, more preferably 90 mass% or more, and particularly preferably 95 mass% or more (all of these values are values expressed in terms of the amounts of the charged raw materials).

The polymer block (c2) may contain other copolymerizable monomer units together with the conjugated diene compound unit. Examples of the other copolymerizable monomers include styrene, α-methylstyrene, and 4-methylstyrene. The ratio of the other copolymerizable monomer units to the total amount of the conjugated diene compound unit and the other copolymerizable monomer units is preferably 20 mass% or lower, more preferably 10 mass% or lower, and particularly preferably 5 mass% or lower.

The thermoplastic elastomer (C) is preferably the partially or entirely hydrogenated polymer block (c2) (also simply expressed as "hydrogenation") in view of heat resistance and weather resistance. The hydrogenation ratio of the polymer block (c2) is preferably 80% or higher, and more preferably 90% or higher.

In this specification, the hydrogenation ratio is a value that is obtained by measuring the iodine value of the block copolymer before the hydrogenation reaction and that after the hydrogenation reaction.

The content of the polymer block (c1) in the thermoplastic elastomer (C) is preferably 5 to 75 mass%, more preferably 5 to 60 mass%, and particularly preferably 10 to 40 mass% in view of softness, stretching property, bending resistance, and adhesion.

The weight-average molecular weight (Mw) of the thermoplastic elastomer (C) is not particularly limited, and is preferably 30,000 to 500,000, more preferably 60,000 to 200,000, and particularly preferably 80,000 to 180,000 in view of stretching property, bending resistance, adhesion, and moldability.

One or two or more types of thermoplastic elastomers (C) can be used. In particular, a combination of a medium molecular weight product having an Mw of 50,000 to 150,000 and a high molecular weight product having an Mw of 150,000 to 300,000 is preferred because it is easy to achieve a good balance among a stretching property, a bending resistance, adhesion, and moldability. The medium molecular weight product/high molecular weight product (mass ratio) is preferably 10/90 to 90/10, more preferably 20/80 to 75/25, and particularly preferably 20/80 to 55/45.

The adhesive layer may be composed of a thermoplastic polymer composition (X) containing a thermoplastic elastomer (C) and an adhesion imparting component (D) in order to enhance the adhesion between the front layer and the rear layer.

The adhesion imparting component (D) is preferably a polyvinyl acetal resin (DV) and/or a polar group-containing polypropylene-based resin (DP).

The lower limit value of the content of the adhesion imparting component (D) based on 100 pts.mass of the thermoplastic elastomer (C) is preferably 10 pts.mass, more preferably 12 pts.mass, and particularly preferably 15 pts.mass. Further, the upper limit value of the content is preferably 100 pts.mass, more preferably 70 pts.mass, and particularly preferably 50 pts.mass. The content of the adhesion imparting component (D) based on 100 pts.mass of the thermoplastic elastomer (C) is preferably 10 to 100 pts.mass, more preferably 10 to 70 pts.mass, still more preferably 12 to 70 pts.mass, still more preferably 15 to 70 pts.mass, particularly preferably 15 to 50 pts.mass, and most preferably 15 to 45 pts.mass. When the amount of the adhesion imparting component (D) is less than 10 pts.mass, the effect of improving the adhesion by the addition of the adhesion imparting component (D) may not be effectively obtained. Further, when the amount of the adhesion imparting component (D) is more than 100 pts.mass, the softness and the adhesion of the adhesive layer may deteriorate.

The polyvinyl acetal resin (DV) is a resin that is obtained by acetalizing two adjacent hydroxyl groups of polyvinyl alcohol with at least one type of alkyl aldehyde such as acetaldehyde and n-butyraldehyde.

The at least one type of alkyl aldehyde used for the acetalization preferably contains n-butyraldehyde. The ratio (molar ratio) of the butyral unit among the acetal units present in the polyvinyl acetal resin (DV) is preferably 0.8 or higher, more preferably 0.9 or higher, and particularly preferably 0.95 or higher.

The acetalization degree (the mole fraction of the acetalized vinyl alcohol unit) of the polyvinyl acetal resin (DV) is preferably 55 to 88 mol%, more preferably 60 to 88 mol%, particularly preferably 70 to 88 mol%, and most preferably 75 to 85 mol%. A polyvinyl acetal resin (DV) having the acetalization degree of 55 mol% or higher can be manufactured at a low cost, is easily obtained, and has an excellent melt-processing property. A polyvinyl acetal resin (DV) having the acetalization degree of 88 mol% or lower can be easily manufactured, does not require a long time for the acetalization reaction, and hence is economical. A polyvinyl acetal resin (DV) having the acetalization degree of 88 mol% or lower has excellent adhesion. A polyvinyl acetal resin (DV) having the acetalization degree of 55 mol% or higher has an excellent affinity and compatibility with the thermoplastic elastomer (C), and a thermoplastic polymer composition (X) containing such a polyvinyl acetal resin (DV) has a high stretching property, a high bending resistance, and a high adhesive strength.

The acetalization degree of the polyvinyl acetal resin (DV) can be determined according to JIS K 6728.

In view of affinity with the thermoplastic elastomer (C), the content of the vinyl alcohol unit in the polyvinyl acetal resin (DV) is preferably 12 to 45 mol%, and more preferably 12 to 40 mol%. Further, the content of the vinyl acetate unit in the polyvinyl acetal resin (DV) is preferably 0 to 5 mol%, and more preferably 0 to 3 mol%.

In the polyvinyl acetal resin (DV), the sequence order of the units is not particularly limited. That is, the units may be randomly arranged, arranged in a block shape, or arranged in a tapered shape.

Examples of the polar group of the polar group-containing polypropylene-based resin (DP) include a (meth)acryloyloxy group, a hydroxyl group, an amide group, halogen atoms such as chlorine atom, a carboxy group, and an acid anhydride group.

In view of adhesion, the polar group-containing polypropylene-based resin (DP) is preferably a polypropylene containing a carboxy group as a polar group, i.e., a carboxylic acid-modified polypropylene-based resin. Among them, a maleic acid-modified polypropylene-based resin and a maleic anhydride-modified polypropylene-based resin are more preferred.

The polar group-containing polypropylene-based resin (DP) may be obtained by copolymerizing propylene and an α-olefin other than propylene with a polar group-containing copolymerizable monomer. Examples of α-olefins other than propylene include ethylene, 1-butene, 1-pentene, 1-hexene, 1-octene, 4-methyl-1-pentene, and cyclohexene. An α-olefin can be copolymerized with a polar group-containing copolymerizable monomer by a known method. Examples of known methods include random copolymerization, block copolymerization, and graft copolymerization. The ratio of the α-olefin unit other than propylene in the polar group-containing polypropylene-based resin (DP) is preferably 0 to 45 mol%, more preferably 0 to 35 mol%, and particularly preferably 0 to 25 mol% in view of affinity with the thermoplastic elastomer (C).

After the polymerization, post-processing may be performed for the polar group contained in the polar group-containing polypropylene-based resin (DP). For example, the (meth)acrylic acid group or the carboxy group may be neutralized by metal ions, and thereby converted into an ionomer. Alternatively, the (meth)acrylic acid group or the carboxy group may be esterified by methanol, ethanol, and the like. The vinyl acetate may be, for example, hydrolyzed.

The thermoplastic polymer composition (X) may further contain a polar group-containing polyolefin-based copolymer (O) other than the polar group-containing polypropylene-based resin (DP) in view of moldability, stretching property, bending resistance, and adhesion.

The amount of the polar group-containing polyolefin-based copolymer (O) based on 100 pts.mass of the thermoplastic elastomer (C) is preferably 5 to 100 pts.mass, more preferably 20 to 70 pts.mass, and particularly preferably 35 to 60 pts.mass. When the amount of the added polar group-containing polyolefin-based copolymer (O) is 5 pts.mass or more, the adhesive layer tends to have excellent adhesion at 190°C or lower. Further, when the amount of the polar group-containing polyolefin-based copolymer (O) is 100 pts.mass or less, the adhesive layer tends to have excellent softness, an excellent stretching property, and an excellent bending resistance.

The polar group-containing polyolefin-based copolymer (O) is preferably a polyolefin-based copolymer composed of an olefin-based copolymerizable monomer and a polar group-containing copolymerizable monomer.

Examples of the olefin-based copolymerizable monomer include ethylene, 1-butene, 1-pentene, 1-hexene, 1-octene, 4-methyl-1-pentene, and cyclohexene. One or two or more types of them can be used. Among them, ethylene is preferred in view of adhesion.

Examples of the polar group of the polar group-containing polyolefin-based copolymer (O) include an ester group, a hydroxyl group, an amide group, halogen atoms such as chlorine atom, a carboxy group, and an acid anhydride group.

Examples of the polar group-containing copolymerizable monomer include (meth)acrylic esters, (meth)acrylic acids, vinyl acetate, vinyl chloride, ethylene oxide, propylene oxide, and acrylamide. One or two or more types of them can be used. Among them, (meth)acrylic esters are preferred in view of adhesion.

Examples of (meth)acrylic esters suitable as the polar group-containing copolymerizable monomer include alkyl acrylate esters such as methyl acrylate, ethyl acrylate, n-propyl acrylate, isopropyl acrylate, n-butyl acrylate, isobutyl acrylate, n-hexyl acrylate, isohexyl acrylate, n-octyl acrylate, isooctyl acrylate, and 2-ethylhexyl acrylate; and alkyl methacrylic esters such as methyl methacrylate (MMA), ethyl methacrylate, n-propyl methacrylate, isopropyl methacrylate, n-butyl methacrylate, isobutyl methacrylate, n-hexyl methacrylate, isohexyl methacrylate, n-octyl methacrylate, isooctyl methacrylate, and 2-ethylhexyl methacrylate. One or two or more types of them can be used. Among them, because of the feature that strong adhesion can be obtained even with heating treatment at 190°C or lower, alkyl acrylate esters are preferred; methyl acrylate and ethyl acrylate are more preferred; and methyl acrylate is particularly preferred.

The thermoplastic polymer composition (X) may contain other thermoplastic polymers such as olefin-based polymers, styrene-based polymers, polyphenylene ether-based resins, polyethylene glycol, and various tackifier resins. Examples of the olefin-based polymer include polyethylene, polypropylene, and polybutene; and block copolymers or random copolymers of propylene and other α-olefins such as ethylene and 1-butene.

The amount of the added other thermoplastic polymers based on 100 pts.mass of the thermoplastic elastomer (C) is preferably 100 pts.mass or less, more preferably 50 pts.mass or less, and particularly preferably 2 pts.mass or less.

The thermoplastic polymer composition (X) may contain an inorganic filler in view of heat resistance and weather resistance, and in order to adjust hardness thereof. Examples of the inorganic filler include calcium carbonate, talc, magnesium hydroxide, aluminum hydroxide, mica, clay, natural silicic acid, synthetic silicic acid, titanium oxide, carbon black, barium sulfate, glass balloons, and glass fibers. One or two or more types of them can be used. When the inorganic filler is contained, the amount of the added inorganic filler is preferably within a range in which the softness of the thermoplastic polymer composition (X) is not impaired, and is preferably, based on 100 pts.mass of the thermoplastic elastomer (C), 10 pts.mass or less, more preferably 5 pts.mass or less, and particularly preferably 2 pts.mass or less.

The thermoplastic polymer composition (X) may contain additives such as a softener, an antioxidant, a lubricant, a light stabilizer, a processing aid, a pigment, a coloring agent such as a dye, a flame retardant, an antistatic agent, a matting agent, a silicone oil, a blocking agent, an ultraviolet absorber, a mold release agent, a foaming agent, an antibacterial agent, an anti-mold agent, and a perfume.

Examples of the antioxidant include hindered phenol-based antioxidants, phosphorus-based antioxidants, lactone-based antioxidants, and hydroxyl-based antioxidants. Among them, hindered phenol-based antioxidants are preferred. The amount of the added antioxidants is preferably within a range in which the thermoplastic polymer composition (X) is not colored when it is melt-kneaded, and is preferably 0.1 to 5 pts.mass based on 100 pts.mass of the thermoplastic elastomer (C).

The method for preparing the thermoplastic polymer composition (X) is not particularly limited as long as a plurality of types of components can be uniformly mixed, and a melt kneading method is usually used. The melt kneading can be performed by using a melt kneading apparatus such as a single-screw extruder, a twin-screw extruder, a kneader, a batch mixer, a roller, or a Bunbury mixer. The temperature in the melt kneading is preferably 170 to 270°C.

The hardness of the thermoplastic polymer composition (X) measured according to a JIS-A method in conformity with JIS K 6253 is preferably 90 or lower, more preferably 30 to 90, and particularly preferably 35 to 85. When the hardness exceeds 90, the softness and the elastic modulus tend to deteriorate.

### (Other Resin Layer)

The laminate according to the present invention may include, if necessary, other resin layers other than the adhesive layer between the front layer, which is a weather-resistant resin layer, and the rear layer, which is an antifouling resin layer.

The laminate according to the present invention may include, if necessary, a functional layer(s) other than the weather-resistant resin layer, the antifouling resin layer, and the adhesive layer between the front layer, which is a weather-resistant resin layer, and the rear layer, which is an antifouling resin layer.

### (Film)

In an aspect, an example of the laminate according to the present invention is a laminated film (also referred to as a multi-layered film). The laminated film may be a non-stretched film or a stretched film.

In this specification, unless otherwise specified, a "film" is a non-stretched film and a "stretched film" is a film obtained by stretch-molding a non-stretched film by a known method.

In general, the term "film" or "sheet" is used for a thin film molded article depending on the thickness, but there is no clear distinction between these terms. In this specification, the term "film" includes a "film" and a "sheet".

A non-stretched laminated film according to the present invention, which includes a front layer which is a weather-resistant resin layer, a rear layer which is an antifouling resin layer, and an adhesive layer provided between them, has excellent stretching property, so that the laminated film is prevented from being ruptured even when stretch molding is performed. According to the present invention, it is possible to provide a stretched film which is excellent in transparency, weather resistance, antifouling property, chemical resistance, and antifogging property, and also has an excellent handling property because it is excellent in bending resistance and interlayer adhesion.

The laminated film according to the present invention may be used for three-dimensional coating molding. Since the laminated film according to the present invention is excellent in stretching property and bending resistance, the laminated film is prevented from being ruptured even when it is used for three-dimensional coating molding. It is possible to manufacture, by a known three-dimensional coating molding, a three-dimensional coating molded article composed of an adherend molded article having an arbitrary three-dimensional shape and a laminated film according to the present invention covering the adherend molded article.

Examples of the method for manufacturing a three-dimensional coating molded article include an integration molding method in which a laminated film according to the present invention is placed over an adhered molded article, which has been three-dimensionally formed in advance, and they are pressed; a method in which a laminated film according to the present invention is three-dimensionally molded by a vacuum molding method, and an adherend molded article is injection-molded in the presence of the three-dimensionally molded laminated film by a film insert molding method; and a method in which a laminated film according to the present invention is brought into tight contact with and bonded to an adhered molded article, which has been three-dimensionally formed in advance, along the three-dimensional shape of the adhered molded article by a vacuum molding method.

According to the present invention, it is possible to provide a three-dimensional coating molded article excellent in transparency, weather resistance, antifouling property, chemical resistance, and antifogging property.

### (Thicknesses of Laminate and Each Layer)

In the laminate according to the present invention, the thickness of the front layer is preferably 1/20 to 2/3 of the total thickness of the laminate, and more preferably 1/10 to 2/3 thereof.

In the laminate according to the present invention, the thickness of the rear layer is preferably 1/20 to 2/3 of the total thickness of the laminate, and more preferably 1/10 to 2/3 thereof.

When the thickness of each of the front layer and the rear layer is 1/20 of the total thickness of the laminate or larger, the functions of the front layer and the rear layer, which are the functional layers, are sufficiently obtained, and when the thickness is 2/3 of the total thickness of the laminate or smaller, the sufficient thickness of the adhesive layer is secured, so that the effect of improving the softness obtained by the adhesive layer is desirably exhibited.

In the laminate according to the present invention, the thickness of the adhesive layer is preferably 1/5 to 9/10 of the total thickness of the laminate, and more preferably 1/5 to 8/10 thereof in order to secure the satisfactory functions of the front layer and the rear layer and improve the adhesion between these layers.

The total thickness of the laminate according to the present invention can be designed according to the use or the like.

When the laminate according to the present invention is a laminated film, the total thickness is preferably 20 to 500 µm, and more preferably 50 to 300 µm.

### (Manufacturing Method)

A laminate according to the present invention can be manufactured by a known molding method such as an extrusion method, an inflation method, and a calendar method, and a coextrusion method is preferred.

A laminated film, which is an example of the laminate according to the present invention, can be manufactured by a known technique such as a coextrusion method; and a thermal fusion method such as a thermal pressing method and a thermal laminating method, and a coextrusion method is preferred.

A method for manufacturing a laminated film by a coextrusion method will be described.

Fig. 2 shows, as an embodiment, a schematic diagram of an extrusion apparatus including a T-die 11, first to third cooling rolls 12 to 14, and a pair of winding rolls 15.

Constituent resins in each layer are each melted and kneaded using an extruder and co-extruded in the form of films from the T die 11 with a wide discharge port in the form of the desired laminated structure.

Examples of the laminating method include a feed block method in which resins are laminated before flowing into the T-die, and a multi-manifold method in which resins are laminated inside the T-die. The multi-manifold method is preferred in order to improve interfacial smoothness between layers.

The molten thermoplastic resin laminate coextruded from the T-die 11 is pressed and cooled by using the plurality of cooling rolls 12 to 14. A laminated film 16 obtained after the pressing and cooling is wound by the pair of winding rolls 15. The number of cooling rolls may be designed as appropriate. Note that the configuration of the manufacturing apparatus can be modified as desired within the scope and spirit of the present invention.

Since the laminate according to the present invention includes a front layer which is a weather-resistant resin layer composed of an acrylic resin composition (A) containing an elastic material (R) and an ultraviolet absorber, the laminate has low ultraviolet transmittance (UV transmittance) and an excellent weather resistance. The transmittance of the laminate according to the present invention at a wavelength of 300 nm is preferably 5% or lower.

Since the laminate according to the present invention includes a rear layer which is an antifouling resin layer containing a vinyl alcohol resin (B), preferably an ethylene vinyl alcohol copolymer resin (EVOH), the rear-surface side of the laminate is excellent in antifouling property, chemical resistance, and antifogging property.

The laminate according to the present invention includes, between the front layer and the rear layer, an adhesive layer containing a thermoplastic elastomer (C), and more preferably at least one adhesion imparting component (D) selected from the group consisting of a polyvinyl acetal resin (DV) and/or a polar group-containing polypropylene-based resin (DP).

In an original state, the adhesion between the front layer containing an acrylic resin, which is an amorphous resin, and the rear layer containing an ethylene vinyl alcohol copolymer resin (EVOH), which is a crystalline resin, is low. However, it is possible to enhance the adhesion between the front layer and the rear layer and thereby enhance the interlayer adhesion by providing the above-described adhesive layer between these layers.

In the case of a layer structure including no hard coating layer, the front layer of the laminate according to the present invention includes a soft elastic material (R), and the adhesive layer of the laminate includes a soft thermoplastic elastomer (C), so that the laminate is excellent in stretching property and bending resistance.

Since the laminate according to the present invention is excellent in stretching property, bending resistance, and interlayer adhesion, cracking or delamination is prevented even when the laminate is stretched or bent at a room temperature, so that the laminate has an excellent handling property.

Since the laminate according to the present invention is excellent in stretching property, bending resistance, and interlayer adhesion, the laminate can be suitably used for stretch molding, three-dimensional coating molding, and the like.

The laminate according to the present invention can have excellent transparency.

The haze of the laminate according to the present invention is preferably 15% or lower, and more preferably 10% or lower.

The "haze" can be measured by a method described in the [Examples] section described later.

As described above, according to the present invention, the laminate is excellent in transparency, weather resistance, antifouling property, chemical resistance, and antifogging property, and also excellent in stretching property, bending resistance, and interlayer adhesion. Therefore, it is possible to provide a laminate having an excellent handling property.

### [Use]

The laminate according to the present invention is excellent in transparency, weather resistance, antifouling property, chemical resistance, antifogging property, and handling property, and is suitable for uses in automobile exteriors, building materials, agriculture, and the like.

### [Examples]

Examples according to the present invention and comparative examples will be described.

### [Evaluation Items and Evaluation Methods]

The evaluation items and evaluation methods are as follows. (Weight-average molecular weight (Mw), Molecular-weight distribution (Weight-average molecular weight (Mw)/Number-average molecular weight (Mn)))

The weight-average molecular weight (Mw) and the molecular-weight distribution (i.e., weight-average molecular weight (Mw)/number-average molecular weight (Mn)) of a resin were obtained by a gel permeation chromatography (GPC) method. As a GPC apparatus, HLC-8320 (product number) equipped with a differential refractive index detector (RI detector), manufactured by Tosoh Corporation was used. Tetrahydrofuran was used as an eluent, and two "TSKgel SuperMultipore HZM-M" and one "SuperHZ 4000", both of which were manufactured by Tosoh Corporation, were connected in series and used as a column. A sample solution was prepared by dissolving 4 mg of a resin in 5 ml of tetrahydrofuran. The temperature of the column oven was set to 40°C; 20 µl of the sample solution was injected at an eluent flow rate of 0.35 ml/min; and a chromatogram was measured. The GPC was measured using 10 standard polystyrenes having a molecular weight of 400 to 5,000,000, and a calibration curve indicating a relationship between the retention time and the molecular weight was created. Mw and Mw/Mn of the resin were determined based on this calibration curve.

### (Weather Resistance)

The multi-layered film was cut into 50 mm × 50 mm test pieces. Using a super UV testing machine (SUV-W161 manufactured by Iwasaki Electric Co., Ltd.), the test piece was irradiated with ultraviolet rays for 200 hours under conditions of a black panel temperature of 83°C, a relative humidity of 50%, and irradiation energy of 100 mW/cm². After that, the test piece was taken out of the testing machine, and the transmission spectrum in a wavelength range of 200 to 800 nm was obtained by using a spectrophotometer ("UV3600" manufactured by Shimadzu Corporation). Then, transmittance at a wavelength of 300 nm was determined. This transmittance is referred to as "UV transmittance after weathering test". The lower the UV transmittance after the weathering test is, the better it indicates that the weathering resistance is.

### (Antifouling Property)

The multi-layered film was cut into 50 mm × 50 mm test pieces. The rear surface of the multi-layered film (the surface on the third layer side in Table 3) was used as a test surface, and this test surface was rubbed 30 times with a sufficiently dried flannel cloth. Next, the test surface was brought into contact with polyester fiber dust for 10 minutes. After that, the presence/absence of dust on the test surface was visually observed and evaluated. The evaluation criteria were as follows.
A (Good): No dust was deposited on the test surface.
C (Defective): Dust was deposited on the test surface.

### (Chemical Resistance)

The multi-layered film was cut into 50 mm × 50 mm test pieces. The rear surface of the multi-layered film (the surface on the third layer side in Table 3) was used as a test surface, and as a chemical substance, 0.2 ml of oleic acid (manufactured by Neutrogena) was dropped onto the test surface at a room temperature (20 to 25 °C) by using a dropper. Then, the test piece was kept at 80°C for 24 hours. After that, the chemical substance on the test surface were wiped with gauze, and the appearance of the test surface was visually observed as to whether there was any abnormality or not, and thereby evaluated. The evaluation criteria were as follows.
A (Good): There was no abnormality in the appearance over the entire test surface.
B (Acceptable): Dissolution was observed in a part(s) of the test surface, but the test surface was not whitened as a whole.
C (Defective): Dissolution and whitening were observed throughout the test surface.

### (Antifogging Property)

The multi-layered film was cut into 50 mm × 50 mm test pieces. The rear surface of the multi-layered film (the surface on the third layer side in Table 3) was used as a test surface.

A water bath was set inside a rectangular parallelepiped plastic case of which the entire upper surface was opened, and the temperature and the relative humidity inside the case were adjusted to 27°C and 85%, respectively. A test piece was placed above the upper surface of the plastic case. Note that the test piece was set so that the above-described test surface was positioned on the inner side of the case. After the test piece was kept for 10 minutes in this state, the size of the largest water droplet condensed on the test surface was measured. The evaluation criteria were as follows.
A (Good): The size of the largest condensed water droplet was smaller than 3 mm.
C (Defective): The size of the largest condensed water droplet was equal to or larger than 3 mm.

### (Transparency)

The multi-layered film was cut into 50 mm × 50 mm test pieces. The haze of the test piece was measured at a temperature of 23°C by using a haze meter ("HM-150" manufactured by Murakami Color Research Laboratory Co., Ltd.) according to JIS K 7361-1.

### (Stretching Property)

The multi-layered film was cut into 50 mm × 50 mm test pieces. The tensile elongation at break of the test piece was measured according to JIS-K 7127 by using "Autograph AG -5000B" manufactured by Shimadzu Corporation.

### (Interlayer Adhesion)

The multi-layered film was cut into 50 mm × 50 mm test pieces. A T-type peeling strength between the rear layer and the adhesive layer was measured under the conditions of a tensile speed of 300 mm/min and an environmental temperature of 23°C according to JIS K 6854-2 by using a bench precision universal testing machine ("AGS-X" manufactured by Shimadzu Corporation).

### (Bending Resistance)

A 50 × 50 mm test piece was cut out from the central part of the multi-layered film. Then, the test piece was repeatedly bent in the direction perpendicular to the direction of the extruding of the film and returned to its original position according to ISO 5626 (JIS P 8115: 2001), and the number of times of reciprocating bending until the test piece was ruptured was measured.

### [Synthesis Example 1] (Synthesis of Thermoplastic Elastomer (C-1))

64 L of cyclohexane as a solvent, 0.20 L of sec-butyl lithium (10 mass% cyclohexane solution) as an initiator, and 0.3 L of tetrahydrofuran as an organic Lewis base were charged into a dried pressure-resistant container of which the inside was nitrogen-purged. After being heated to 50°C, 2.3 L of styrene was added and the mixture was polymerized for 3 hours. Then, 23 L of isoprene was added and the mixture was polymerized for 4 hours. Further, 2.3 L of styrene was added and the mixture was polymerized for 3 hours.

The obtained reaction solution was poured into 80 L of methanol, and the precipitated solid was filtered out and dried at 50°C for 20 hours, so that a triblock copolymer composed of polystyrene-polyisoprene-polystyrene was obtained.

Next, 10 kg of the above-described triblock copolymer was dissolved in 200 L of cyclohexane, and 5 mass% of palladium carbon (amount of carried palladium: 5 mass%) was added as a hydrogenation catalyst to the above-described copolymer. Further, the mixture was made to react for 10 hours at 150°C under a hydrogen pressure of 2 MPa. After being cooled and depressurized, the palladium carbon was removed by filtration. Then, the obtained filtrate was concentrated and vacuum-dried, so that a hydrogenated triblock copolymer composed of polystyrene-polyisoprene-polystyrene was obtained. Hereinafter, this copolymer will be referred to as a "thermoplastic elastomer (C-1)".

The obtained thermoplastic elastomer (C-1) had a weight-average molecular weight (Mw) of 107,000, a styrene unit content of 21 mass%, a hydrogenation rate of 85%, and a molecular-weight distribution (Mw/Mn) of 1.04. In the polyisoprene block contained in the thermoplastic elastomer (C-1), the sum of the amounts of 1,2-bonding and 3,4-bonding based on the sum of the amounts of 1,2-bonding, 3,4-bonding, and 1,4-bonding was 60 mol%.

### [Synthesis Example 2] (Synthesis of Thermoplastic Elastomer (C-2))

80 L of cyclohexane as a solvent and 0.46 L of sec-butyl lithium (10 mass% cyclohexane solution) as an initiator were charged into a dried pressure-resistant container of which the inside was nitrogen-purged. Further, 0.25 L of tetrahydrofuran (equivalent to 5.4 times, in the stoichiometric mixture ratio, of lithium atoms in the initiator) as an organic Lewis base was charged into the container. After being heated to 50°C, 3.5 L of styrene was added and the mixture was polymerized for 3 hours, and then 34 L of butadiene was added and the mixture was polymerized for 4 hours. The obtained reaction solution was poured into 80 L of methanol, and the precipitated solid was filtered out and dried at 50°C for 20 hours, so that a diblock copolymer composed of polystyrene-polybutadiene was obtained.

Next, 10 kg of the above-described diblock copolymer was dissolved in 200 L of cyclohexane, and 5 mass% of palladium carbon (amount of carried palladium: 5 mass%) was added as a hydrogenation catalyst to the above-described copolymer. Further, the mixture was made to react for 10 hours at 50°C under a hydrogen pressure of 2 MPa. After being cooled and depressurized, the palladium carbon was removed by filtration. Then, the filtrate was concentrated and vacuum-dried, so that a hydrogenated diblock copolymer composed of polystyrene-polybutadiene was obtained. Hereinafter, this copolymer will be referred to as a "thermoplastic elastomer (C-2)".

The obtained thermoplastic elastomer (C-2) had a weight-average molecular weight (Mw) of 70,500, a styrene content of 13 mass%, a hydrogenation rate of 98%, and a molecular-weight distribution of 1.05. In the polybutadiene block contained in the thermoplastic elastomer (C-2), the sum of the amounts of 1,2-bonding and 3,4-bonding based on the sum of the amounts of 1,2-bonding, 3,4-bonding, and 1,4-bonding was 40 mol%.

### [Synthesis Example 3] (Synthesis of Thermoplastic Elastomer (C-3))

Similarly to the Synthesis Example 1, a thermoplastic elastomer (C-3) in which, in the polyisoprene block, the sum of the amounts of 1,2-bonding and 3,4-bonding based on the sum of the amounts of 1,2-bonding, 3,4-bonding, and 1,4-bonding was 30 mol% was obtained.

### [Synthesis Example 4] (Synthesis of Polyvinyl Acetal Resin (DV-1))

75 kg of n-butyraldehyde and 110 kg of 35 to 37% hydrochloric acid were added to an aqueous solution in which 100 kg of a polyvinyl alcohol resin having an average polymerization degree of 500 and a saponification degree of 99 mol% was dissolved. Then, the resulting solution was stirred to be acetalized, and a resin was made to precipitate. The obtained resin was washed until its pH became 7 by a known method, and was dried until its volatility component became 0.3%. Through the above-described processes, a polyvinyl acetal resin (DV-1) having an acetalization degree of 80 mol% was obtained.

[Synthesis Example 5] (Synthesis of Polar Group-Containing Polypropylene Resin (DP-1))
42 kg of polypropylene ("Prime Polypro F327" manufactured by Prime Polymer Co., Ltd.), 160 g of maleic anhydride, and 42 g of 2,5-dimethyl-2,5-di(tert-butylperoxy)hexane were melt-kneaded at 180°C at a screw rotation speed of 40 rpm by using a batch mixer, so that a polar group-containing polypropylene-based resin (DP-1) was obtained.

The polar group-containing polypropylene-based resin (DP-1) had an MFR of 6 g/10 min at 230°C under a load of 2.16 kg (21.18 N), a maleic anhydride concentration of 0.3%, and a melting point of 138°C. Note that the maleic anhydride concentration is a value obtained by titration using a methanol solution of potassium hydroxide. Further, the melting point is a value obtained from an endothermic peak of a differential scanning calorimetry curve when the temperature is raised at a rate of 10°C/min.

### [Synthesis Example 6] (Synthesis of Multilayer-Structure Particles (E-1))

1050 pts.mass of deionized water, 1 pts.mass of sodium dodecylbenzene sulfonate and 0.05 pts.mass of sodium carbonate were charged into a reactor equipped with a stirrer, a thermometer, a nitrogen gas feeding tube, a monomer feeding tube, and a reflux condenser. The inside of the reactor was sufficiently replaced with a nitrogen gas so that there was substantially no oxygen therein, and the temperature in the reactor was set to 80°C. 0.1 pts.mass of a 3% aqueous solution of potassium persulfate was charged into the reactor, and the mixture was stirred for 5 minutes.

After that, 26.2 pts.mass of a mixture (i) composed of 49.9 mass% of methyl methacrylate (MMA), 49.9 mass% of butyl acrylate (BA), and 0.2 mass% of allyl methacrylate (ALMA) was continuously added over a period of 20 minutes. After the completion of the addition, the polymerization reaction was made to proceed further for at least 30 minutes so that the polymerization rate became 98% or higher.

Next, 0.05 pts.mass of a 3 mass% aqueous solution of potassium persulfate was added in the reactor, and the mixture was stirred for 5 minutes. After that, 157.4 pts.mass of a mixture (ii) composed of 5 mass% of MMA, 93.5 mass% of BA, and 1.5 mass% of ALMA was continuously added over a period of 40 minutes. After the completion of the addition, the polymerization reaction was made to proceed further for at least 30 minutes so that the polymerization rate became 98% or higher.

Next, 0.5 pts.mass of a 3% aqueous solution of potassium persulfate was added in the reactor and, the mixture was stirred for 5 minutes. After that, 341.1 pts.mass of a mixture (iii) composed of 87.2 mass% of MMA, 12.5 mass% of BA, and 0.3 mass% of n-octylmercaptan (n-OM) was continuously added over a period of 100 minutes. After the completion of the addition, the polymerization reaction was made to proceed further for at least 60 minutes so that the polymerization rate became 98% or higher. Through the above-described processes, an emulsion containing acrylic multi-layer structure particles (E-1) having a number-average particle diameter of 100 nm was obtained.

Next, the emulsion containing acrylic multi-layer structure particles (E-1) was frozen at -30°C over a period of 4 hours. The frozen emulsion was charged into and thereby dissolved in 80°C hot water of which the volume was 2 times of that of the frozen emulsion, and then the mixture was kept at 80°C for 20 minutes, so that a slurry thereof was obtained. After that, the slurry was dehydrated and further dried at 70°C, so that a powder of acrylic multi-layer structure particles (E-1) was obtained. This powder was pelletized by a known method.

### [Synthesis Example 7] (Synthesis of Block Copolymer (G-1))

A triblock copolymer (G-1) composed of [methyl methacrylate (MMA) polymer block (g1)] - [n-butyl acrylate (BA) polymer block (g2)] - [methyl methacrylate (MMA) polymer block (g1)], and having a weight-average molecular weight (Mw) of 70,000, a mass ratio of the polymer blocks (g1): (g2): (g1) = 14.3: 50.0: 35.7, and a mass ratio of the monomers (MMA: BA) = (50: 50) was synthesized by a known method.

### [Synthesis Example 8] (Synthesis of Vinyl Alcohol Resin (B-1)) (Polymerization of Ethylene-Vinyl Acetate Copolymer)

83 kg of vinyl acetate and 14.9 kg of methanol were charged into a 250 L pressurized reaction tank equipped with a jacket, a stirrer, a nitrogen feeding port, an ethylene feeding port, and an initiator feeding port. Then, after being heated to 60°C, a nitrogen gas was bubbled into the reaction solution for 30 minutes, so that the inside of the reaction tank was nitrogen-purged. Next, ethylene was fed so that the pressure (ethylene pressure) inside the reaction tank became 4.0 MPa. After the temperature in the reaction tank was adjusted to 60°C, a solution that was prepared by dissolving 12.3 g of 2,2'-azobis(2,4-dimethylvaleronitrile) ("V-65" manufactured by Wako Pure Chemical Industries, Ltd.) as an initiator in methanol was added, and polymerization was thereby started. The ethylene pressure was maintained at 4.0 MPa and the polymerization temperature was maintained at 60°C during the polymerization. Five hours later, when the polymerization rate of vinyl acetate reached 40%, the polymerization was stopped by cooling the solution. Ethylene was discharged from the reaction tank, and a nitrogen gas was bubbled into the reaction solution so that ethylene was completely removed. Next, after the unreacted vinyl acetate was removed under a reduced pressure, an ethylene-vinyl acetate copolymer (hereinafter referred to as an "EVAc") was obtained.

### (Saponification)

Methanol was added to the obtained EVAc solution, so that an EVAc solution having a concentration of 15 mass% was obtained. 76.6 L of a methanol solution containing 10 mass% of sodium hydroxide (the molar ratio was 0.4 based on the vinyl acetate unit in the EVAc) was added to 253.4 kg of the above-described methanol solution of the EVAc (the EVAc in the solution was 38 kg), and the mixture was stirred at 60°C for 4 hours so that the EVAc was saponified. Six hours after the start of the reaction, 9.2 kg of acetic acid and 60 L of water were added in the reaction solution to neutralize the reaction solution, and the reaction was thereby stopped.

### (Washing)

After the neutralization, the reaction solution was transferred from the reactor to a drum and left at a room temperature (20 to 25°C) for 16 hours, so that the reaction solution was cooled and solidified into a cake-like shape. After that, the above-described cake-like resin was desiccated by using a centrifuge ("H-130" manufactured by Kokusan Enshinki Co., Ltd., rotation speed of 1,200 rpm). Next, the above-described resin was washed by continuously supplying ionexchange water to the central part of the centrifuge from above, and the operation for washing the above-described resin with water was performed for 10 hours. The conductivity of the washing solution 10 hours after the start of washing was 30 µS/cm (measured by "CM-30ET" manufactured by Toa Electronics Ltd.).

### (Granulation)

The washed resin was dried at 60°C for 48 hours by using a dryer, so that a powdery ethylene vinyl alcohol resin (EVOH) was obtained. 20 kg of the dried powdery EVOH was dissolved in 43 L of a water/methanol mixed solution (mass ratio: water/methanol = 4/6), and the mixture was stirred at 80°C for 12 hours. Next, the stirring was stopped, and the temperature of the dissolving tank was lowered to 65°C. Further, the mixture was left for 5 hours, so that the water/methanol solution of the EVOH was defoamed. Next, this solution was extruded from a gold plate with a circular opening having a diameter of 3.5 mm into a water/methanol mixed solution (mass ratio: water/methanol = 9/1) having a temperature of 5°C, made to precipitate in a strand shape, and cut, so that hydrous EVOH pellets each having a diameter of about 4 mm and a length of about 5 mm were obtained.

### (Purification)

The obtained hydrous EVOH pellets were dehydrated by a centrifuge, and were washed by repeating operations in which a large amount of water was added and the pellets were dehydrated, so that ethylene vinyl alcohol resin (EVOH) pellets were obtained. The saponification degree of the obtained EVOH was 99 mol% and the content of the ethylene unit was 44 mol%. The EVOH pellets were used as a vinyl alcohol resin (B-1).

### [Synthesis Example 9] (Synthesis of Vinyl Alcohol Resin (B-2))

Similarly to the Synthesis Example 8, pellets of an ethylene vinyl alcohol resin (EVOH) having an ethylene unit content of 38 mol% were obtained. The EVOH pellets were used as a vinyl alcohol resin (B-2).

### [Synthesis Example 10] (Synthesis of Vinyl Alcohol Resin (B-3))

Similarly to the Synthesis Example 8, pellets of an ethylene vinyl alcohol resin (EVOH) having an ethylene unit content of 27 mol% were obtained. The EVOH pellets were used as a vinyl alcohol resin (B-3).

### [Synthesis Example 11] (Synthesis of Vinyl Alcohol Resin (B-4))

Similarly to the Synthesis Example 8, pellets of an ethylene vinyl alcohol resin (EVOH) having an ethylene unit content of 5 mol% were obtained. The EVOH pellets were used as a vinyl alcohol resin (B-4).

### [Manufacturing Example 1] (Manufacturing of Thermoplastic Polymer Composition (X-1))

56 pts.mass of a thermoplastic elastomer (C-1), 19 pts.mass of a polyvinyl acetal resin (DV-1), and 25 pts.mass of a polar group-containing polypropylene-based resin (DP-1) were melt-kneaded at 230°C by using a twin-screw extruder. Then, the melt-kneaded mixture was extruded into a strand shape and cut, so that pellets of a thermoplastic polymer composition (X-1) were manufactured. The formulation is shown in Table 1.

In the Manufacturing Examples 1 to 7, "TEM-28" manufactured by Toshiba Machine Co., Ltd. was used as the twin-screw extruder.

### [Manufacturing Example 2] (Manufacturing of Thermoplastic Polymer Composition (X-2))

81 pts.mass of a thermoplastic elastomer (C-1) and 19 pts.mass of a polyvinyl acetal resin (DV-1) were melt-kneaded at 230°C by using the twin-screw extruder. Then, the melt-kneaded mixture was extruded into a strand shape and cut, so that pellets of a thermoplastic polymer composition (X-2) were manufactured. The formulation is shown in Table 1.

### [Manufacturing Example 3] (Manufacturing of Thermoplastic Polymer Composition (X-3))

85 pts.mass of a thermoplastic elastomer (C-2) and 15 pts.mass of a polar group-containing polypropylene-based resin (DP-1) were melt-kneaded at 230°C by using the twin-screw extruder. Then, the melt-kneaded mixture was extruded into a strand shape and cut, so that pellets of a thermoplastic polymer composition (X-3) were manufactured. The formulation is shown in Table 1.

### [Manufacturing Example 4] (Manufacturing of Thermoplastic Polymer Composition (X-4))

98 pts.mass of a thermoplastic elastomer (C-1) and 2 pts.mass of a polar group-containing polypropylene-based resin (DP-1) were melt-kneaded at 230°C by using the twin-screw extruder. Then, the melt-kneaded mixture was extruded into a strand shape and cut, so that pellets of a thermoplastic polymer composition (X-4) were manufactured. The formulation is shown in Table 1.

### [Manufacturing Example 5] (Manufacturing of Thermoplastic Polymer Composition (X-5))

85 pts.mass of a thermoplastic elastomer (C-3) and 15 pts.mass of a polar group-containing polypropylene-based resin (DP-1) were melt-kneaded at 230°C by using the twin-screw extruder. Then, the melt-kneaded mixture was extruded into a strand shape and cut, so that pellets of a thermoplastic polymer composition (X-5) were manufactured. The formulation is shown in Table 1.

**[Table 1]**

| | Manufacturing Example 1 | Manufacturing Example 2 | Manufacturing Example 3 | Manufacturing Example 4 | Manufacturing Example 5 |
|---|---|---|---|---|---|
| Thermoplastic Polymer Composition | X-1 | X-2 | X-3 | X-4 | X-5 |
| Thermoplastic Elastomer (C-1) | 56 | 81 | | 98 | |
| Thermoplastic Elastomer (C-2) | | | 85 | | |
| Thermoplastic Elastomer (C-3) | | | | | 85 |
| Polyvinyl Acetal Resin (DV-1) | 19 | 19 | | | |
| Polar Group-containing Polypropylene-based Resin (DP-1) | 25 | | 15 | 2 | 15 |

### [Manufacturing Example 6] (Manufacturing of Acrylic Resic Composition (A-1))

A commercially-available homopolymer of methyl methacrylate (MMA) (weight-average molecular weight (Mw): 80,000) was prepared as a methacrylic resin (M-1).

20 pts.mass of methacrylic resin (M-1), 80 pts.mass of pellets of acrylic multi-layer structure particles (E-1), and 1 pts.mass of 2-[4,6-bis(1,1'-biphenyl-4-yl)-1,3,5-triazine-2-yl]-5-[(2-ethylhexyl) oxy] phenol ("Tinuvin 1600" manufactured by BASF SE) as a benzotriazole-based ultraviolet absorber were kneaded by using the twin-screw extruder and pelletized by using a pelletizer, so that an acrylic resin composition (A-1) was obtained. The formulation is shown in Table 2.

### [Manufacturing Example 7] (Manufacturing of Acrylic Resin Composition (A-2))

A methyl methacrylate (MMA)/methyl acrylate (MA) copolymer (content of MMA unit: 95 mass%, content of MA unit: 5 mass%, weight-average molecular weight (Mw): 80,000) was prepared as a methacrylic resin (M-2).

An acrylic resin composition (A-2) was obtained in a manner similar to the Manufacturing Example 6 except that the raw material resin composition was changed to 70 pts.mass of a methacrylic resin (M-2) and 30 pts.mass of a block copolymer (G-1). The formulation is shown in Table 2.

**[Table 2]**

| | | Manufacturing Example 6 | Manufacturing Example 7 |
|---|---|---|---|
| Impact Resistant Acrylic Resin Layer | | A-1 | A-2 |
| Methacrylic Resin (M-1) | PMMA | 20 | |
| Methacrylic Resin (M-2) | MMA/MA Copolymer | | 70 |
| Multilayer-Structure Particles (E-1) | | 80 | |
| Block Copolymer (G-1) | | | 30 |
| UV Absorber | Benzotriazoles | 1 | 1 |

### [Example 1]

Pellets of the acrylic resin composition (A-1) were prepared as a material for a front layer (first layer), and pellets of the thermoplastic polymer composition (X-1) were prepared as a material for an intermediate layer (second layer). Further, the vinyl alcohol resin (B-1) (EVOH pellets) was prepared as a material for a rear layer (third layer). Each of these resins was put into a hopper of a separate single-screw extruder ("VGM 25-28EX" manufactured by G. M. ENGINEERING) and melt-kneaded therein. The molten resins were co-extruded by using a multi-manifold die, pressed and cooled by using a plurality of cooling rolls, and wound by a pair of winding rolls.

Through the above-described processes, a multi-layered film (width of 30 cm, total thickness of 100 µm) having a three-layer structure composed of a front layer (first layer, impact resistant acrylic resin layer, thickness of 30 µm)/an intermediate layer (second layer, adhesive layer, thickness of 50 µm)/a rear layer (third layer, EVOH layer, thickness of 20 µm) was obtained. Note that the thickness of each of the layers was controlled by the flow rate in the extrusion. The laminated structure of the obtained multi-layered film and evaluation results thereof are shown in Table 3.

### [Examples 2 to 6]

A multi-layered film was obtained in a manner similar to the Example 1 except that the material for each of the layers was changed as shown in Table 1. The laminated structure of the obtained multi-layered film and evaluation results thereof are shown in Table 3.

**[Table 3]**

| | | Example 1 | Example 2 | Example 3 | Example 4 | Example 5 | Example 6 |
|---|---|---|---|---|---|---|---|
| First Layer (Front Layer) | Acrylic Resin Composition (A) (Inpact Resistant Acrylic Resin) | A-1 | A-2 | A-2 | A-1 | A-1 | A-1 |
| Second Layer (Intermediate Layer, Adhesive Layer) | Thermoplastic Polymer Composition (X) | X-1 | X-1 | X-1 | X-2 | X-3 | X-2 |
| Third Layer (Rear Layer) | Ethylene Vinyl Alcohol Resin (B) (EVOH) | B-1 | B-1 | B-2 | B-1 | B-1 | B-3 |
| | Ethylene Content | 44mol% | 44mol% | 38mol% | 44mol% | 44mol% | 27mol% |
| | Material for Comparison | | | | | | |
| Weather Resistance | UV Transmittance after Weathering Test | <5% | <5% | <5% | <5% | <5% | <5% |
| Antifouling Property | | A | A | A | A | A | A |
| Chemical resistance | | A | A | A | A | A | A |
| Antifogging Property | | A | A | A | A | A | A |
| Transparency | Haze | 8% | 9% | 6% | 9% | 9% | 9% |
| Stretching Property | Tensile Elongation At Break | 75% | 70% | 65% | 80% | 80% | 80% |
| Interlayer Adhesion | Adhesive Strength | 60N | 60N | 55N | 50N | 50N | 50N |
| Bending Resistance | Number of Reciprocating Bending | > 5,000 | > 5,000 | > 5,000 | > 5,000 | > 5,000 | > 5,000 |

### [Comparative Example 1]

Pellets of an acrylic resin composition (A-1) were charged into a hopper of a single-screw extruder ("VGM 25-28EX" manufactured by G. M. ENGINEERING) and melt-kneaded therein. The molten resin was extruded by using a single-layer die, pressed and cooled by using a plurality of cooling rolls, and wound by a pair of winding rolls, so that a single-layer film having a width of 30 cm and a thickness of 100 µm was obtained.

A coating liquid composed of a mixture of 100 pts.mass of a hard coating agent ("EBECRYL 40" manufactured by Daicel Cytec Co., Ltd.) and 5 pts.mass of a fluorine-based additive ("SUBELYN KY - 1203" manufactured by Shin-Etsu Chemical Co., Ltd.) was coated on one surface of the obtained single-layer film by using a wire bar (#40), and dried at 60°C for 1 minute. Next, the coating film was irradiated with ultraviolet rays under the condition of the amount of irradiation light of 0.5 J/cm² by using an ultraviolet irradiation apparatus (MIDN-042-C1 manufactured by Eye Graphics Co., Ltd., UV lamp output: 120 W) under an air atmosphere, so that a hard coating layer (also called a "cured film") having a thickness of 10 µm was formed.

Through the above-described processes, a multi-layered film having a two-layer structure of a front layer (first layer, impact resistant acrylic resin layer, thickness of 100 µm)/a rear layer (third layer, fluorine-based hard coating layer, thickness of 10 µm) was obtained. The laminated structure of the obtained multi-layered film and evaluation results thereof are shown in Table 4.

### [Comparative Example 2]

A multi-layered film (width of 30 cm, total thickness of 100 µm) was obtained in a manner similar to the Example 1 except that the multi-layered film, which has a two-layer structure, was obtained by directly laminating a front layer (first layer, impact resistant acrylic resin layer, thickness of 50 µm) and a rear layer (third layer, EVOH layer, thickness of 50 µm) without any intermediate layer (second layer, adhesive layer) interposed therebetween. The laminated structure of the obtained multi-layered film and evaluation results thereof are shown in Table 4.

### [Comparative Example 3]

A multi-layered film was obtained in a manner similar to the Example 1 except that the material for the rear layer (third layer) was changed to a polypropylene resin (PP-1) ("Prime Polypro E222" manufactured by Prime Polymer Co., Ltd.). The laminated structure of the obtained multi-layered film and evaluation results thereof are shown in Table 4.

### [Comparative Examples 4-6]

Each of multi-layered films was obtained in a manner similar to the Example 1 except that the material for each of the layers was changed as shown in Table 4. The laminated structure of the obtained multi-layered film and evaluation results thereof are shown in Table 4.

**[Table 4]**

| | | Comparative Example 1 | Comparative Example 2 | Comparative Example 3 | Comparative Example 4 | Comparative Example 5 | Comparative Example 6 |
|---|---|---|---|---|---|---|---|
| First Layer (Front Layer) | Acrylic Resin Composition (A) (Inpact Resistant Acrylic Resin) | A-1 | A-1 | A-1 | A-1 | A-1 | A-1 |
| Second Layer (Intermediate Layer, Adhesive Layer) | Thermoplastic Polymer Composition (X) | | | X-1 | X-4 | X-5 | X-2 |
| Third Layer (Rear Layer) | Ethylene Vinyl Alcohol Resin (B) (EVOH) | | B-1 | | B-1 | B-1 | B-4 |
| | Ethylene Content | | 44mol% | | | | 5mol% |
| | Material for Comparison | Fluorine-based Hard Coating Layer | | PP-1 | | | |
| Weather Resistance | UV Transmittance after Weathering Test | <5% | <5% | <5% | <5% | <5% | <5% |
| Antifouling Property | | A | A | B | A | A | C |
| Chemical resistance | | A | A | A | A | A | A |
| Antifogging Property | | A | A | C | A | A | A |
| Transparency | Haze | 1% | 5% | 20% | 5% | 5% ' | 5% |
| Stretching Property | Tensile Elongation At Break | 5% | 30% | 70% | 30% | 30% | 80% |
| Interlayer Adhesion | Adhesive Strength | - | 5N | 80N | 5N | 5N | 50N |
| Bending Resistance | Number of Reciprocating Bending | < 1 | Delamination | 300 | Delamination | Delamination | > 5,000 |

### [Summary of Results]

In each of the Example 1 to 6, a multi-layered film composed of a front layer which is a weather-resistant resin layer composed of an acrylic resin composition (A) containing an elastic material (R) and an ultraviolet absorber, a rear layer which is an antifouling resin layer containing a vinyl alcohol resin (B), and an adhesive layer provided between the front layer and the rear layer and containing a thermoplastic elastomer (C), a polyvinyl acetal resin (DV), and/or a polar group-containing polypropylene-based resin (DP) was manufactured. The obtained multi-layered films are all excellent in weather resistance, and their rear sides are excellent in antifouling property, chemical resistance, and antifogging property.

The obtained multi-layered films are all excellent in transparency, and are also excellent in stretching property, bending resistance, and interlayer adhesion, and hence excellent in handling property.

In the Comparative Example 1, a multi-layered film was obtained by forming a fluorine-based hard coating layer on one surface of a single-layer film composed of an acrylic resin composition (A) containing an elastic material (R) and an ultraviolet absorber. The obtained multi-layered film had a poor stretching property and a poor bending resistance, and was one that could be easily broken during the handling of the film.

In the Comparative Example 2, a multi-layered film having a two-layer structure was obtained by directly laminating the front layer (first layer, impact resistant acrylic resin layer) and the rear layer (third layer, EVOH layer) without any intermediate layer (second layer, adhesive layer) interposed therebetween. The obtained multi-layered film had a poor interlayer adhesion, and delamination occurred during the bending-resistance test. The obtained multi-layered film was one that could be easily delaminated during the handling of the film.

In the Comparative Example 3, a polypropylene resin was used as the material for the rear layer (third layer). The obtained multi-layered film had poor transparency and a poor antifogging property. The multi-layered film was one that could not be used for uses in which transparency and an antifogging property are required.

In the Comparative Example 4, a thermoplastic polymer composition (X) containing a thermoplastic elastomer (C) and 2 mass% of an adhesion imparting component (D) was used as the material for the intermediate layer. The obtained multi-layered film had poor interlayer adhesion between the intermediate layer and the EVOH layer, and delamination occurred during the bending-resistance test. The obtained multi-layered film was one that could be easily delaminated during the handling of the film.

In the Comparative Example 5, a thermoplastic elastomer (C) in which a polymer block (c2) contained a butadiene unit and/or an isoprene unit, and the ratio of the sum of the amounts of 1,2-bonding and 3,4-bonding to the sum of the amounts of the 1,2-bonding, the 3,4-bonding, and 1,4-bonding was 30 mol% was used as the material for the intermediate layer. The obtained multi-layered film had a poor interlayer adhesion, and delamination occurred during the bending-resistance test. The obtained multi-layered film was one that could be easily delaminated during the handling of the film.

In the Comparative Example 6, a vinyl alcohol resin (B) having an ethylene content of 5 mol% was used as the material for the rear layer (third layer). The obtained multi-layered film had a poor antifouling property. The multi-layered film was one that could not be used for uses in which an antifouling property is required.

The present invention is not limited to the above-described embodiments and examples, and their designs can be modified as appropriate without departing from the scope and spirit of the invention.

This application is based upon and claims the benefit of priority from Japanese patent application No. 2020-125189, filed on July 22, 2020, the entire disclosure of which is incorporated herein in its entirety by reference.

### Reference Signs List

- 1: LAMINATE
- 1A: FRONT LAYER (WEATHER-RESISTANT RESIN LAYER)
- 1B: REAR LAYER (ANTIFOULING RESIN LAYER)
- 1C: ADHESIVE LAYER
- 16: LAMINATED FILM

## Claims

1. A laminate of which both surfaces have different functions, comprising:
a front layer, the front layer being a weather-resistant resin layer composed of an acrylic resin composition (A) containing an elastic material (R) and an ultraviolet absorber;
a rear layer, the rear layer being an antifouling resin layer containing a vinyl alcohol resin (B); and
an adhesive layer disposed between the front layer and the rear layer, the adhesive layer containing a thermoplastic elastomer (C), the thermoplastic elastomer (C) being a block copolymer containing a polymer block (c1) containing an aromatic vinyl compound unit and a polymer block (c2) containing a conjugated diene compound unit, or being a compound obtained by hydrogenating the aforementioned block copolymer, wherein
the vinyl alcohol resin (B) is an ethylene vinyl alcohol copolymer in which a content of an ethylene unit is 20 to 50 mol%,
the adhesive layer is composed of a thermoplastic polymer composition (X) containing 100 pts.mass of the thermoplastic elastomer (C), and 10 to 100 pts.mass of at least one adhesion-imparting component (D) selected from the group consisting of a polyvinyl acetal resin (DV) and a polar group-containing polypropylene-based resin (DP), and
the polymer block (c2) is a copolymer block containing a butadiene unit and/or an isoprene unit, in which a ratio of a sum of amounts of 1,2-bonding and 3,4-bonding to a sum of amounts of the 1,2-bonding, the 3,4-bonding, and 1,4-bonding is 40 mol% or higher.

2. The laminate according to Claim 1, wherein
the acrylic resin composition (A) contains a methacrylic resin (M) containing 80 mass% or more of a methyl methacrylate unit, an elastic material (R), and the ultraviolet absorber,
the ultraviolet absorber is a benzotriazole-based ultraviolet absorber and/or a triazine-based ultraviolet absorber,
the acrylic resin composition (A) is an acrylic resin composition in which, based on a total of 100 pts.mass of the methacrylic resin (M) and the elastic material (R), a content of the methacrylic resin (M) is 10 to 99 pts.mass and a content of the elastic material (R) is 90 to 1 pts.mas, and
a transmittance of the laminate at a wavelength of 300 nm is 5% or lower.

3. The laminate according to Claim 1 or 2, wherein the elastic material (R) is crosslinked rubber particles, and/or a block copolymer containing a methacrylic ester polymer block (gl) containing a methacrylic ester unit and an acrylic ester polymer block (g2) containing an acrylic ester unit.

4. The laminate according to any one of Claims 1 to 3, wherein a total thickness is 20 to 500 µm; a ratio of a thickness of the front layer to the total thickness is 1/20 to 2/3; and a ratio of a thickness of the rear layer to the total thickness is 1/20 to 2/3.

5. The laminate according to any one of Claims 1 to 4, wherein the laminate is a stretched film.

6. The laminate according to any one of Claims 1 to 5, further comprising a functional layer disposed between the front layer and the rear layer, the functional layer having a function different from those of the front layer, the rear layer, and the adhesive layer.
